(19) Europäisches Patentamt
European Patent Office
Office européen des brevets

(11) Veröffentlichungsnummer: **0 036 966**
**B1**

# (12) EUROPÄISCHE PATENTSCHRIFT

(45) Veröffentlichungstag der Patentschrift: **19.10.83**

(51) Int. Cl.³: **C 09 B 19/02**

(21) Anmeldenummer: **81101596.5**

(22) Anmeldetag: **06.03.81**

## (54) Verfahren zur Herstellung eines violetten Pigmentfarbstoffs.

(30) Priorität: **21.03.80 DE 3010949**

(43) Veröffentlichungstag der Anmeldung: **07.10.81 Patentblatt 81/40**

(45) Bekanntmachung des Hinweises auf die Patenterteilung: **19.10.83 Patentblatt 83/42**

(84) Benannte Vertragsstaaten: **CH DE FR GB LI**

(56) Entgegenhaltungen:
**DE-C-517 194**
**GB-A-387 565**
**GB-A-878 661**
**B.I.O.S. FINAL REPORT, Nr. 960, Item Nr. 22, pages 75—77, British intelligence objectives sub committee; 32, Bryanston Square, W1 London, G.B., »German dyestoffs and dyestoffs intermediates; anthrasols, heliogens, sinus light blue dyestoffs«**

(73) Patentinhaber: **CASSELLA Aktiengesellschaft, Hanauer Landstrasse 526, D-6000 Frankfurt am Main 61 (DE)**

(72) Erfinder: **Hufnagel, Theobald, Flurstrasse 1, D-6463 Freigericht 1 (DE)**
Erfinder: **Hetschko, Manfred, Dr., Würzburger Strasse 1, D-6458 Rodenbach (DE)**

(74) Vertreter: **Urbach, Hans-Georg, Dr. et al, Hanauer Landstrasse 526, D-6000 Frankfurt am Main 61 (DE)**

**EP 0 036 966 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung eines violetten Pigmentfarbstoffs

Die vorliegende Erfindung betrifft ein Verfahren zur Herstellung des Pigmentfarbstoffs der Formel I

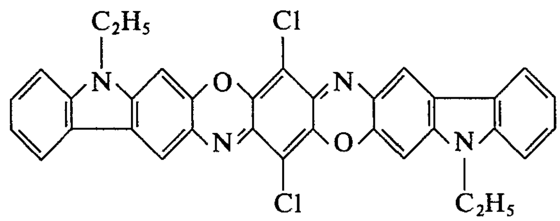

(I)

C.I. Pigment Violet 23.

C.I. Pigment Violet 23 ist seit über 50 Jahren bekannt und hat im Laufe dieser Zeit wegen seiner hervorragenden Eigenschaften eine sehr große Bedeutung erlangt.Es wird daher in großen Mengen industriell hergestellt. Solange der Farbstoff bekannt ist, sind die Grundzüge seiner Herstellung die gleichen geblieben. Die Synthese erfolgt durch Umsetzung von Chloranil (Tetrachlor-p-benzochinon) mit zwei Molen 3-Amino-9-ethylcarbazol zum 2,5-Di(9-ethylcarbazol-3-yl-amino)-3,6-dichlorbenzochinon-(1,4) und anschließendem Ringschluß zum Pigmentfarbstoff der Formel I (vgl. Venkataraman: The Chemistry of Synthetic Dyes, Band II [1952], S. 786 und 787). Zur Veranschaulichung der Reaktion diene das folgende Formelschema:

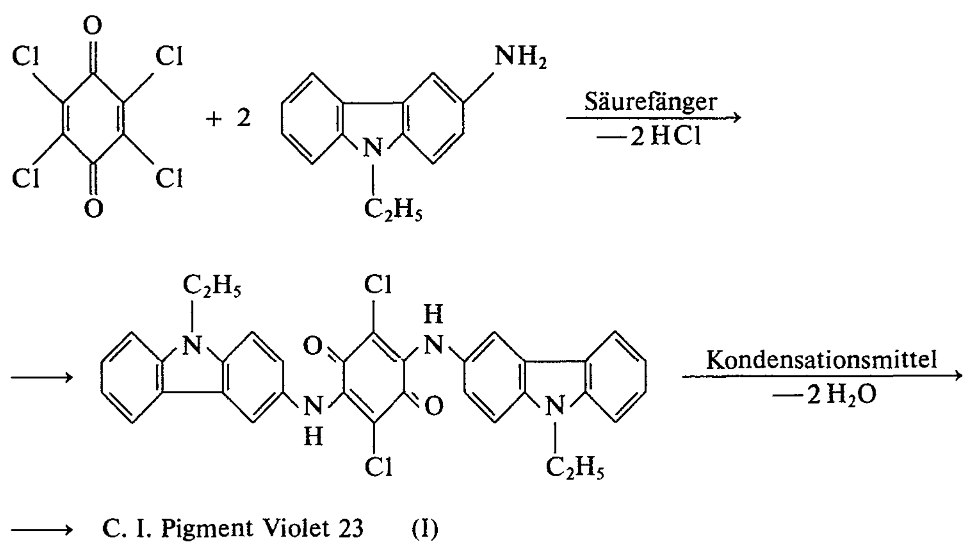


Die in der ältesten, diesem Pigmentfarbstoff gewidmeten Patentschriften, der deutschen Patentschrift 517 194 und der britischen Patentschrift 387 565 zur Durchführung dieser Synthese angegebenen Verfahren erwiesen sich jedoch als nicht optimal, insbesondere lieferten sie eine zu geringe Ausbeute. Im Hinblick auf die hervorragende Qualität des Farbstoffs und seine ständig wachsende Bedeutung sind diese Verfahren daher oft und intensiv bearbeitet worden mit dem Ziel, die Ausbeute des Farbstoffs und die Form, in der er bei der Herstellung anfällt, soweit wie möglich zu verbessern.

Variationen wurden durchgeführt hinsichtlich der Lösungsmittel, des Säurefängers und des den Ringschluß katalysierenden Kondensationsmittels. Als Lösungsmittel sind empfohlen worden, z. B. Dichlorbenzol, Trichlorbenzol, Pyridin, Nitrobenzol und Mononitronaphthalin. Als Säurefänger, die die in der ersten Stufe der Synthese entstehende Salzsäure abfangen sollen, sind empfohlen worden die Alkaliacetate und -karbonate. Die zunächst nur durch längeres Erhitzen in hochsiedenden Benzolderivaten durchgeführte Ringschlußreaktion wurde später in Gegenwart von Kondensationshilfsmitteln durchgeführt. Als solche wurden empfohlen beispielsweise Metallchloride (deutsche Patentschrift 517 194) oder Benzolsulfochlorid (Venkataraman, loc. cit., Band 2 [1952], S. 787).

Auch der Zusatz oxydierender Substanzen, wie Ferri-Verbindungen, Dinitrophenol oder Pikrinsäure, insbesondere auch ein Überschuß von Chloranil, ist für die Beschleunigung und Verbesserung der Umsetzung empfohlen worden.

Bislang optimaler Stand der Technik ist das im Biosreport 960, S. 75, beschriebene Betriebsverfahren zur Herstellung von C.I. Pigment Violet 23.

Dieses optimierte Betriebsverfahren liefert bei Einsatz ausgesucht reiner Ausgangsmaterialien eine akzeptable Farbstoffausbeute, die bei sorgfältiger Durchführung des Verfahrens bis 85% der Theorie

reicht. Bei sorgfältigster Optimierung aller Verfahrensmaßnahmen lassen sich großtechnisch nach diesem Verfahren sogar Ausbeuten um 89% erhalten. Dennoch weist dieses Verfahren einen sehr gravierenden Nachteil auf. Es reagiert außerordentlich empfindlich auf Qualitätsunterschiede der Ausgangsmaterialien, insbesondere Qualitätsunterschiede des Chloranils. Will man daher bei der Durchführung dieses großtechnischen Verfahrens keine erheblichen Verluste, insbesondere des teuren 9-Ethyl-3-aminocarbazols, hinnehmen, so ist es erforderlich, das einzusetzende Chloranil Partie für Partie einer Vorprüfung zu unterwerfen und nur diejenigen Chloranil-Partien für die Herstellung des C.I. Pigment Violet 23 einzusetzen, deren Qualitätsstandard eine hohe Ausbeute verspricht.

Das Aussuchen der Chloranil-Partien bedeutet nicht nur einen zusätzlichen erheblichen Arbeitsaufwand vor der Durchführung der technischen Synthese, sondern es kann auch zu einem Aufstau für das Verfahren nicht optimal verwendbarer Chloranilpartien kommen. Der Einsatz ausgesuchter Chloranil-Partien für das bekannte technische Verfahren kann auch zu sekundären Kosten, wie zusätzlichen Transportkosten, führen und es kann auch zu Rohstoff-Engpässen kommen, nämlich dann, wenn über längere Zeit nur qualitativ unzureichendes Chloranil lieferbar ist. Die Schwierigkeiten werden dadurch noch vergrößert, daß es keine eindeutigen analytischen Qualitätsmerkmale gibt, welche klar erkennen lassen, welches Chloranil für die Herstellung von C.I. Pigment Violet 23 nach dem bekannten technischen Verfahren eingesetzt werden kann, und welches nicht. Die Auswahl kann lediglich durch einen Vorversuch, bei dem im Laboratoriumsmaßstab der Farbstoff hergestellt wird, erfolgen. Es ist daher bis jetzt auch nicht gelungen, das Chloranil von vornherein mit Sicherheit in einer Qualität herzustellen, die den Anforderungen des bekannten technischen Verfahrens zur Herstellung von C.I. Pigment Violet 23 genügt.

Die erheblichen Schwierigkeiten, die mit der Auswahl spezieller qualitativ besonders hochwertiger Chloranil-Partien verbunden sind, führen dazu, daß in der Praxis doch jedes Chloranil nach dem bekannten technischen Verfahren zu C.I. Pigment Violet 23 verarbeitet wird, wobei dann bei Einsatz weniger geeigneter Partien die Ausbeuten bis auf ca. 70% zurückgehen. In der Praxis führt daher das bekannte technisch durchgeführte Verfahren zur Herstellung von C.I. Pigment Violet 23 in Abhängigkeit von der Chloranilqualität zu erheblichen Ausbeuteschwankungen und zu empfindlichen Verlusten.

Es sind zahlreiche Versuche gemacht worden festzustellen, welcher Mechanismus dem Einfluß der Chloranilqualität auf die Ausbeute des Verfahrens zugrunde liegt. Insbesondere wurde das Reaktionsgeschehen durch Dünnschichtchromatographie verfolgt. Hierbei zeigte sich, daß schlechte Chloranilqualitäten zu einer erheblichen Verringerung der Reaktionsgeschwindigkeit zwischen Chloranil und 9-Ethyl-3-aminocarbazol führen. Während mit gutem Chloranil die Reaktion nach 6 bis 7 Stunden soweit fortgeschritten ist, daß die Ansätze nur noch sehr geringe Mengen 9-Ethyl-3-aminocarbazol enthalten, ist bei Einsatz von schlechteren Chloranilqualitäten noch nach 18 Stunden unumgesetztes Carbazolderivat nachzuweisen. Versucht man durch noch längeres Rühren des Reaktionsansatzes oder durch Steigerung der Temperatur, die Umsetzung zu vervollständigen, so entstehen dunkel gefärbte polymere Nebenprodukte, die den Ansatz lediglich verunreinigen, ohne einen wesentlichen Beitrag zur Ausbeute an Pigmentfarbstoff zu erbringen.

Es wurde nun überraschend gefunden, daß man C.I. Pigment Violet 23 nach dem bekannten technischen Herstellungsverfahren unabhängig von der Qualität des eingesetzten Chloranils in hervorragender Ausbeute herstellen kann, wenn man dem Reaktionsansatz geringe Wassermengen, in der Regel 0,1 bis 4 Gew.-%, bezogen auf das Gesamtgewicht des Ansatzes, zufügt. Die vorteilhafte Auswirkung eines Wasserzusatzes zu dem Reaktionsansatz war nicht zu erwarten. Im Gegenteil mußte befürchtet werden, daß ein Wasserzusatz die Reaktion erheblich beeinträchtigt, da in allen bisherigen Veröffentlichungen über das Verfahren zur Herstellung des C.I. Pigment Violet 23 stets nachdrücklich darauf hingewiesen wird, daß wasserfreies Arbeiten bei der Durchführung des Verfahrens absolut erforderlich ist. So wird bei dem aus Biosreport 960 bekannten Betriebsverfahren das als Lösungsmittel für die Umsetzung verwendete o-Dichlorbenzol vor seiner Verwendung andestilliert, d. h. es wird so viel des Dichlorbenzols abdestilliert, daß mit Sicherheit alle Wasserspuren aus dem Lösungsmittel entfernt werden. Auch das als Säurefänger verwendete Natriumacetat muß wasserfrei sein.

Die vorliegende Erfindung betrifft somit ein Verfahren zur Herstellung des Pigmentfarbstoffs der Formel I, C.I. Pigment Violet 23, durch Kondensation von 3-Amino-9-ethylcarbazol mit überschüssigem Tetrachlorbenzochinon in einem organischen Lösungsmittel in Gegenwart von Säurefängern und gegebenenfalls Kondensationsmitteln, bei welchem in Gegenwart von 0,1 bis 4 Gew.-% Wasser, vorzugsweise 0,15 bis 1,8 Gew.-% Wasser, bezogen auf das Gesamtgewicht des Ansatzes, kondensiert wird.

Wird die Menge von 0,1 Gew.-%, insbesondere 0,15 Gew.-% Wasser, bezogen auf das Gesamtgewicht des Reaktionsgemisches, unterschritten, so nimmt die Auswirkung auf die Verbesserung der Ausbeute allmählich ab. Insbesondere bei Einsatz qualitativ besonders ungünstiger Chloranilpartien kann dann das gewünschte Ziel nicht erreicht werden. Andererseits steigt die Auswirkung des Wasserzusatzes auf die Ausbeute bei steigender Zusatzmenge an, und es gelingt in der Regel mit Mengen von 0,25 bis 0,85 Gew.-% Wasser, die üblichen Qualitätsschwankungen des Chloranils praktisch vollständig auszugleichen. Bei besonders schlechten Chloranilqualitäten kann es

jedoch zweckmäßig sein, die Wassermenge zu steigern, wobei dann zumeist etwa 1,2 bis 1,8 Gew.-% ausreichend sind. Wasserzusätze über 1,8 Gew.-% und insbesondere über 4 Gew.-% verbessern die Pigmentausbeute nicht mehr signifikant. Sie führen im Labor allerdings auch zu keinen Nachteilen, können jedoch im Betrieb unter Umständen eine Verklumpung von Teilen des Reaktionsansatzes herbeiführen.

Ein Mechanismus für die Wirksamkeit des Wasserzusatzes kann z. Z. nicht angegeben werden. Durch dünnschichtchromatographische Untersuchung der nach dem erfindungsgemäß verbesserten Verfahren durchgeführten Reaktionsansätze wurde festgestellt, daß die Reaktionsgeschwindigkeit zwischen Chloranil und 9-Ethyl-3-aminocarbazol erheblich zunimmt und unabhängig wird von der Chloranilqualität. Der Wasserzusatz bewirkt, daß bereits nach ca. 3 Stunden bei jeder Chloranilqualität der gleiche Umsetzungsgrad erreicht wird, der nach dem herkömmlichen Verfahren und bei Einsatz sehr guter Chloranilqualität erst nach 6 bis 7 Stunden eintritt.

Das erfindungsgemäß verbesserte Verfahren bietet noch einen zusätzlichen Vorteil. Das bekannte technische Verfahren arbeitet mit einem Chloranilüberschuß von ca. 50%. Versucht man bei diesem bekannten Verfahren, den Chloranilüberschuß herabzusetzen, so geht sofort die Ausbeute an Pigmentfarbstoff zurück, und außerdem fällt das Produkt in einer schlechteren Form an, so daß sich gewisse Schwierigkeiten bei der Aufarbeitung der Ansätze ergeben.

Es gibt u. W. keinen nachweisbaren Reaktionsmechanismus, der die Wirkung des Chloranilüberschusses auf die Ausbeute und die Form des Farbstoffs schlüssig erklärt. Es hat sich nun gezeigt, daß bei der Durchführung des erfindungsgemäß verbesserten Verfahrens, nämlich mit Wasserzusatz, der Überschuß des Chloranils drastisch reduziert werden kann. In Laborversuchen konnten mit nur 18% Chloranil-Überschuß die gleichen guten Ausbeuten erhalten werden, wie mit dem bisher verwendeten 50%igen Überschuß. Selbst mit einem Chloranil-Überschuß von nur 8% konnten nach dem erfindungsgemäß verbesserten Verfahren noch immer 87% d. Th. Ausbeute erhalten werden.

Die Durchführung des erfindungsgemäß verbesserten Verfahrens erfolgt im wesentlichen in genau derselben Weise wie die des bekannten technischen Verfahrens mit dem einzigen Unterschied, daß nach dem Eintragen aller Reaktionskomponenten in das organische Lösungsmittel noch zusätzlich die benötigte Menge Wasser zudosiert wird. Zweckmäßigerweise erfolgt der Wasserzusatz unter kräftigem Rühren bei allmählicher Zugabe. Die Durchführung des erfindungsgemäß verbesserten Verfahrens und des Verfahrens nach dem Stand der Technik zur Herstellung von C.I. Pigment Violet 23 veranschaulichen das Ausführungsbeispiel 1 und das Vergleichsbeispiel 2. Einen besonders eindrucksvollen Überblick über die Auswirkung des erfindungsgemäßen Wasserzusatzes gibt die graphische Darstellung der Ergebnisse von Reihen-Versuchen, die analog Ausführungsbeispiel 1 und Vergleichsbeispiel 2 durchgeführt wurden. Für jedes zusammengehörende Versuchspaar wurde die gleiche Chloranilqualität eingesetzt; innerhalb der Versuchsreihe wurden Chloranilproben verwendet, die in statistischer zeitlicher Folge aus laufenden Chloranillieferungen entnommen wurden. Zur übersichtlichen Darstellung der Versuchsergebnisse wurden die Versuchsnummern auf der Abszisse, die bei den Versuchen erhaltenen Ausbeuten auf der Ordinate eines Koordinatensystems eingetragen. Die die Ergebnisse des Vergleichversuchs repräsentierenden Punkte wurden durch eine gestrichelte Linie, die Punkte entsprechend dem erfindungsgemäßen Verfahren durch eine durchgezogene Linie miteinander verbunden. Man erkennt, daß die erheblichen Ausbeuteschwankungen des bekannten Verfahrens, die durch schwankende Chloranilqualität bedingt sind, bei dem erfindungsgemäßen Verfahren nicht auftreten.

## Beispiel 1

In 1940 g o-Dichlorbenzol werden bei 50°C 100 g Aminoethylcarbazol, 42,5 g wasserfreies Natriumacetat und 87,5 g Chloranil eingetragen. Dann werden unter kräftigem Rühren 6,3 ml Wasser zugetropft. Die Mischung wird dann 3 Stunden bei 60 – 65°C gerührt. Zu diesem Zeitpunkt läßt sich praktisch kein 9-Ethyl-3-aminocarbazol mehr im Reaktionsgemisch nachweisen. Dann wird der Ansatz im Verlauf von 5 Stunden im Vakuum auf 115°C hochgeheizt, bis keine Essigsäure mehr im Destillat nachgewiesen werden kann. Danach wird die Mischung auf 150°C ohne Vakuum geheizt und bei dieser Temperatur 45 g Benzolsulfochlorid zugesetzt.

Anschließend erwärmt man auf 176 bis 180°C und rührt bei dieser Temperatur, bis keine weitere Essigsäure mehr abdestilliert (4 bis 8 Stunden). Anschließend wird abgekühlt, mit 500 g o-Dichlorbenzol verdünnt, und bei 100°C auf einer Nutsche abgesaugt. Der Niederschlag wird mit 200 ml 100°C warmem o-Dichlorbenzol gewaschen, bis eine Probe des Reaktionsprodukts beim Aufkochen keine blaue Farbe im Filtrat mehr zeigt, sondern nur noch eine rötliche Fluoreszenz. Das o-Dichlorbenzol wird von dem Filterkuchen durch Wasserdampfdestillation entfernt, danach wird das Produkt wiederum abgesaugt und mit Wasser gewaschen. Zum Schluß wird es bei 100°C in einer Schale getrocknet.

Die Ausbeute beträgt 85,5% der Theorie, bezogen auf Aminoethylcarbazol.

Beispiel 2

(Vergleich nach dem Stand der Technik)

In 1940 g durch Andestillieren entwässertes o-Dichlorbenzol werden bei 50° C 100 g Aminoethylcarbazol, 42,5 g wasserfreies Natriumacetat und 87,5 g Chloranil eingetragen. Die Materialien müssen unmittelbar vor dem Gebrauch getrocknet sein. Die Mischung wird 6 Stunden bei 60 – 65° C gerührt. Es lassen sich zu diesem Zeitpunkt nur noch Spuren 9-Ethyl-3-aminocarbazol im Reaktionsgemisch nachweisen. Dann wird die Mischung im Verlauf von 5 Stunden im Vakuum auf 115° C hochgeheizt, bis keine Essigsäure mehr in dem Destillat nachgewiesen werden kann. Danach wird die Mischung auf 150° C ohne Vakuum geheizt und bei dieser Temperatur 45 g Benzolsulfochlorid zugesetzt. Anschließend erwärmt man auf 176 bis 180° C und rührt so lange bei dieser Temperatur, bis keine weitere Essigsäure mehr abdestilliert (4 bis 8 Stunden). Anschließend wird abgekühlt, mit 500 g o-Dichlorbenzol verdünnt, und bei 100° C auf einer Nutsche abgesaugt. Der Niederschlag wird mit 200 ml 100° C warmem o-Dichlorbenzol gewaschen. Eine Probe des Reaktionsgemischs zeigt dann beim Aufkochen keine blaue Farbe im Filtrat mehr, sondern nur noch eine rötliche Fluoreszenz. Das o-Dichlorbenzol wird von dem Filterkuchen durch Wasserdampfdestillation entfernt, danach wird das Produkt wiederum abgesaugt und mit Wasser gewaschen. Zum Schluß wird es bei 100° C in einer Schale getrocknet.

Die Ausbeute beträgt 78,8% der Theorie, bezogen auf Aminoethylcarbazol.

Als organische Lösungsmittel für das erfindungsgemäße Verfahren kommen insbesondere die für die bisherigen Herstellungsverfahren bekannten hochsiedenden Lösungsmittel, also z. B. Monochlorbenzol, Trichlorbenzol, Nitrobenzol, Pyridin, Mononitronaphthalin, aber auch Tetrachlorbenzol, Dichlortoluol, Trichlortoluol, Naphthalin, Chlornaphthalin, Diphenyl usw. in Betracht. o-Dichlorbenzol ist als Lösungsmittel bevorzugt.

**Patentansprüche**

1. Verfahren zur Herstellung des Pigmentfarbstoffs (C.I. Pigment Violet 23) der Formel I

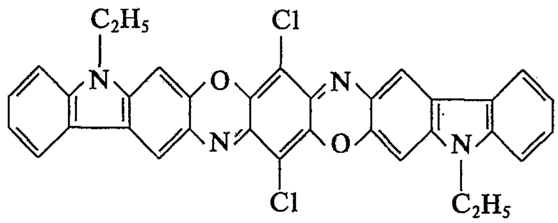

(I)

durch Kondensation von 3-Amino-9-ethylcarbazol mit überschüssigem Tetrachlorbenzochinon in einem organischen Lösungsmittel in Gegenwart von Säurefängern und gegebenenfalls Kondensationsmitteln, dadurch gekennzeichnet, daß in Gegenwart von 0,1 bis 4 Gew.-% Wasser, bezogen auf das Gesamtgewicht des Ansatzes, kondensiert wird.

2. Verfahren gemäß Anspruch 1, dadurch gekennzeichnet, daß in Gegenwart von 0,15 bis 1,8 Gew.-% Wasser kondensiert wird.

3. Verfahren gemäß Anspruch 1, dadurch gekennzeichnet, daß in Gegenwart von 0,25 bis 0,85 Gew.-% Wasser kondensiert wird.

**Claims**

1. Process for the manufacture of the pigment dyestuff (C.I. Pigment Violet 23) of the formula I

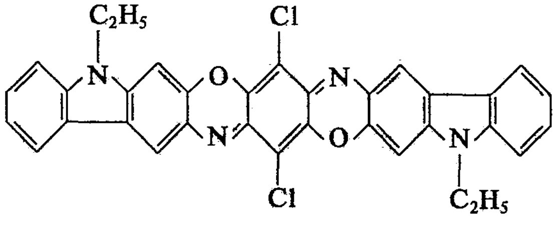

(I)

by condensing 3-amino-9-ethylcarbazole with excess tetrachlorobenzoquinone in an organic solvent in the presence of acid acceptors and, optionally, condensing agents, characterised in that the

condensation reaction is carried out in the presence of 0.1 to 4% by weight of water, relative to the total weight of the batch.

2. The process according to claim 1 characterised in that the condensation reaction is carried out in the presence of 0.15 to 1.8% by weight of water.

3. The process according to claim 1 characterised in that the condensation reaction is carried out in the presence of 0.25 to 0.85% by weight of water.

**Revendications**

1. Procédé de préparation du pigment répondant à la formule I:

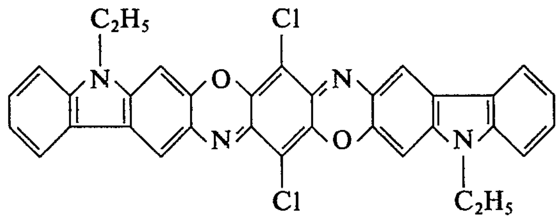

(I)

c'est-à-dire du Pigment Violet C.I. 23, par condensation de l'amino-3 éthyl-9 carbazole avec un excès de tétrachlorobenzoquinone dans un solvant organique, en présence d'accepteurs d'acide et, éventuellement, d'agents de condensation, procédé caractérisé en ce qu'on effectue la condensation en présence de 0,1 à 4% en poids d'eau par rapport au poids total du mélange.

2. Procédé selon la revendication 1, caractérisé en ce qu'on effectue la condensation en présence de 0,15 à 1,8% en poids d'eau.

3. Procédé selon la revendication 1, caractérisé en ce qu'on effectue la condensation en présence de 0,25 à 0,85% en poids d'eau.

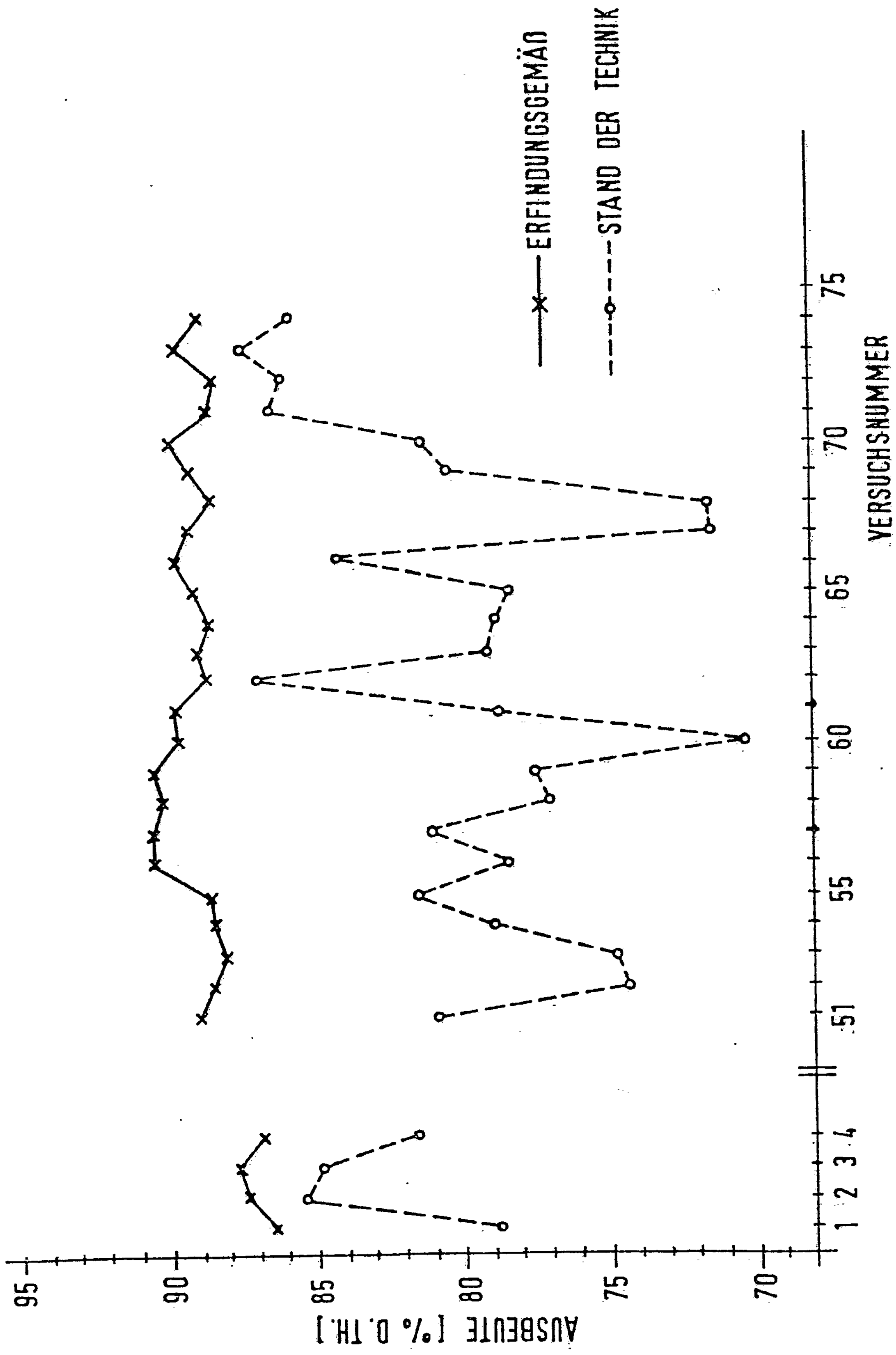
ERFINDUNGSGEMÄß
STAND DER TECHNIK
VERSUCHSNUMMER
1 2 3 4
51
55
60
65
70
75
AUSBEUTE [% D.TH.]
95
90
85
80
75
70